# EUROPEAN PATENT APPLICATION

(11) **EP 4 446 088 A1**
(43) Date of publication of application: **16.10.2024**
(21) Application number: 23168021.6
(22) Date of filing: 14.04.2023
(51) Int. Cl.: B29C 48/385, B29C 48/92, B29C 48/04, B29B 9/06, B29B 9/12

(54) **PROCESS FOR PREPARING A POLYOLEFIN COMPOSITION**

(71) Applicant: Basell Polyolefine GmbH, 50389 Wesseling (DE)
(72) Inventor: HEES, Timo, 55116 Mainz (DE); MAUS, Andreas, 60431 Frankfurt (DE); SCHIRMEISTER, Carl Gunther, 79211 Denzlingen (DE)
(74) Representative: LyondellBasell

(57) **Abstract**

The present disclosure relates to disclosure a process for preparing a pelletized polyolefin composition comprising a component A, which is a recycled polyolefin material and a component B, which is different from component A and preferably a virgin polyolefin. Said process being carried out in a two-stage cascade extrusion process comprising gravimetrically feeding component A to the first stage extruder and component B to the second stage extruder device. Component A is added to the second stage extruder in molten form.

## Description

### FIELD OF THE DISCLOSURE

The present disclosure relates to a process for the preparation of polyolefin compositions containing at least two components, of which at least one component is a recycled polyolefin, via in -line extrusion blending.

### BACKGROUND OF THE DISCLOSURE

Polyolefins, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes (Post Consumer Resins), mainly constituted of flexible packaging (cast film, blown film and BOPP film), rigid packaging, blow molded bottles and injection molded containers. Usually, through a step of sorting from other polymers, such as PVC, PET or PS, a main recycled polyolefin stream is obtained for remolding purposes.

However, the multicomponent nature of the recycled material often results in low mechanical and optical performances and therefore of the recycled polyolefin stream is used to partially replace the virgin polymer in polyolefin formulations.

In order to obtain polymeric products based on recycled polymers with high level of properties, it is often common practice to blend the recycled material with virgin polymers using compounding extrusion lines.

Common approach is to use both recycled and virgin material in pellets. The production process of melt blending virgin and recycled material, both in pellet form, requires high production cost and non-efficient use of energy since both recycled material and virgin materials have to be processed by melt extrusion to form them into pellets using separate processes and are finally melt blended to produce final compositions.

Recycled polyolefin pellets can be continuously produced on an industrial scale. Commonly, plastic waste is collected, sorted, washed and shredded into flakes. The flakes are then fed to an extruder device to produce pellets. However, as the feed recycled material is rather scarce only a limited amount of flakes are fed to the extruder device. Thus, the capacity of the extruder device is not efficiently utilized.

Thus, there is a desire to continuously produce polyolefin compounds, comprising a fraction of recycled material in an efficient manner.

### SUMMARY OF THE DISCLOSURE

The present disclosure provides a process for preparing a pelletized polyolefin composition; the process comprises the steps of:
i. providing a continuous stream of component A, component A being washed and sorted recycled polyolefin material;
ii. gravimetrically feeding the recycled polyolefin material to a first extruder and forming a molten recycled polyolefin material stream,
iii. feeding the molten recycled polyolefin material stream coming from the first extruder to a feeding inlet of a second extruder; and
iv. feeding a stream of a component B to the second extruder, component B being a polyolefin material different from component A.

The process of the present disclosure counteracts the irregular and low supply of recycle feed stock to the extruder device by gravimetrically dosing the recycle feed stock and further adding a second component to increase the extruder output and make use of the excess capacity of the extruder device in a two-step extrusion process. Melt blending in single extrusion processes involving a continuous provision of recycle feed stock, is limited by the drawback that it is difficult to control the final production recipe. In particular, inefficiency of a single extrusion step is especially related to the melt filtration step, that all the material would have to undergo, therefore requiring an overdesigned melt filter, to handle the cumulative polymer flow. Additionally, since most common melt filtration systems used in recycled material compounding involve some material being purged-to-scrap during melt filter cleaning process, this would result in purging-to-scrap also (not contaminated) component B.

Hereinafter, further developments are specified which can be combined with one another as desired, independently of one another.

In some embodiments, the stream of polyolefin material different from the recycled polyolefin material may be a virgin polyolefin deriving from the polymerization of olefins, such as ethylene, propylene, 1-butene, 1-hexene and 1-octene as well as mixtures thereof. While it is also possible to add a recyclate material as component B, in order to adjust the properties of the final composition, virgin polyolefin material as component B is preferred.

Depending on the needs, the sorting of polyolefin fraction can be enhanced in order to obtain an as much as possible pure fraction of either polypropylene or polyethylene. Preferably, the recycled polyolefin material comprises a mixture of polyethylene (PE) and polypropylene (PP) polymers in a weight ratio 99: 1 to 1:99. When PP is more abundant in the mixture, its weight ratio with PE is preferably higher than 80/20, more preferably higher than 90/10, and especially from 95/5 to 99:1. When PE is more abundant in the mixture, its weight ratio with PP is preferably higher than 80/20, more preferably higher than 90/10, and especially from 95/5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

In some embodiments, the molten recycled polyolefin material stream is fed to the second extruder at a location after the feeding point of component B.

In some embodiments, the molten recycled polyolefin material stream is added to component B at a location, in which component B is in molten form.

In some embodiments, the process further comprises the step of measuring the flow rate of component B supplied to the second stage extruder device and measuring the flow rate of the pellets of the final composition obtained from the second extruder device. A computing unit operation device may be provided, which receives data on the measured flow of component Band measured flow rate of pelletized final polymer composition and adjusts the flow rate of component B supplied to the second stage extruder in response to the difference between the measured flow rate of component B and of the measured flow of pelletized final polymer composition in order to produce a final pelletized composition having a pre-set relative content of component B and component A.

In some embodiments, the relative ratio between component A, component B, as well as possible additives and/or reinforcing agents, in the final polyolefin composition is kept in accordance with pre-set formulation composition by adjusting the flow rates of component B and additives and/or reinforcing agents based on the actually metered amount of pelletized final polyolefin composition. For this, the computing unit may determine the difference between the actually produced and metered amount of final polyolefin composition, and the metered flow of component B and possibly additives and/or reinforcing agents.

In some embodiments, the computing unit, via a proper controller, adjusts the flow of the component B feeding device and additives and/or reinforcing agent feeding device so as to meet the predetermined set points for component B and additives and/or reinforcing agent.

In some embodiments, the flow rate of the polyolefin pellets of the final composition is measured on dried polyolefin pellets via a pellet flow meter.

Alternatively or additionally, an in-line MFR measuring device, such as a rheometer may be provided for measuring the melt flow rate of the molten component A before being fed to the second extruder and/or for measuring the melt flow rate of the pelletized final polymer composition. In particular, the melt flow rate of component A may be irregular leading to changes in the melt flow rate of the final composition even if the final pelletized composition has a pre-set relative content of component B and component A. Thus, for some embodiments, a computing unit may be provided, the computing unit receiving data on the melt flow rate of the molten component A before introduction into the second extruder or of the final pelletized composition and adjusting the flow rate of component B supplied to the second stage extruder in response to the difference between the measured MFR and a pre-set target MFR of the final pelletized composition.

In some embodiments, the polyolefin composition may further comprise additives and, optionally, reinforcing agents.

In some embodiments, stabilizing agent may be fed to the second extruder. The amount of stabilizing agent added to the second extruder may correlate to the gravimetric dosing of component A.

In some embodiments, the polyolefin composition comprises a polyolefin portion ranging from 80 to 99.98 wt.% of the total polyolefin composition.

In some embodiments, the recycled polyolefin material in flakes is compacted and preheated before being fed to the first extruder.

In some embodiments, the molten component A is subjected to degassing, humidity removal and contaminant removal by melt filtration equipment before being added to the second extruder.

In some embodiments, component B is fed in either powder or pelletized form to the second extruder, preferably in pelletized form.

### BRIEF DESCRIPTION OF THE DRAWINGS

Figure 1 shows schematically an exemplary set-up for two-stage cascade extrusion process according to an exemplary embodiment of the present disclosure.
Figure 2 shows schematically an exemplary set-up for two-stage cascade extrusion process according to the present disclosure also including peroxide dosing to 1^{st} extruder.

### DETAILED DESCRIPTION OF DISCLOSURE

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the drawings and detailed description are to be regarded as illustrative in nature and not restrictive.

The prepared polyolefin compositions may comprise virgin polyolefins, recycled polyolefin material and optionally one or more additives and/or reinforcing agents.

According to the present disclosure, the term "virgin" defines newly produced polyolefins prior to first use and not being recycled. The virgin polyolefin can derive from polymerization of olefins such as ethylene, propylene, butene-1, hexene-1 and octene-1 and mixture thereof.

Specific examples of the olefinic polymers are high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra low density (VLDPE and LTLDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and/or other alpha-olefins.

The above mentioned polyolefins can be obtained by polymerizing the relative monomers in the presence of any type of polymerization catalyst, such as single-site or heterogeneous ZN catalysts, and using platform technologies known in the art such as liquid phase polymerization, gas-phase polymerization and hybrid liquid/gas-phase polymerization.

According to the present disclosure the terms "recycled polyolefin material" and "recycled" indicate recovered material from either post-consumer waste (PCW) or post industrial waste (PIW) which includes a fraction made of polyolefins.

Preferably, the recycled polyolefin material results from the sorting of the PCW or PIW aimed at selecting the polyolefin fraction.

Depending on the needs, the sorting of polyolefin fraction can be enhanced in order to obtain an as much as possible pure fraction of either polypropylene or polyethylene. Preferably, the recycled polyolefin material comprises a mixture of polyethylene (PE) and polypropylene (PP) polymers in a weight ratio from 99: 1 to 1:99. When PP is more abundant in the mixture, its weight ratio with PE is preferably higher than 80/20, more preferably higher than 90/10, and especially from 95/5 to 99:1. When PE is more abundant in the mixture, its weight ratio with PP is preferably higher than 80/20, more preferably higher than 90/10, and especially from 95/5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

The final composition is preferably defined by a recipe which identifies the nature of the employed component B and component A fractions (the polymeric fraction), the nature of the optionally present additives and/or reinforcing agents, their number, their quantity and their respective ratio. The constitution of the prepared polyolefin compositions may differ significantly from one to another. Preferably, the polymeric fraction of the final polyolefin compositions comprises a majority of polyolefin. Preferably, the polyolefin portion in the polymeric fraction of the final polyolefin compositions is from 80 to 99.98 wt.%, more preferable from 95 to 99.95 wt.%, and especially from 98 to 99.9 wt.%.

Generally, the amount of polymeric fraction in the final composition is higher than 50 wt.% preferably higher than 60 wt.% and more preferably higher than 70 wt.% based on the total weight of the final composition, the remaining being non-polymeric fraction such as additives, fillers and/or reinforcing agents.

The present disclosure refers to the preparation of the above described pelletized polyolefin compositions in an economical and reliable way by using a two-stage cascade extrusion process having a first extruder in which component A is fed and a second extruder in which component B, molten component A and optionally additives and/or reinforcing agents are fed.

According to the present disclosure, the two-stage cascade extrusion process is a polymer processing procedure carried out operating two extruders in series the second of which being fed with the extrudate coming from the first.

According to the present disclosure the term pelletized polyolefin composition refers to the polyolefin composition obtained in form of pellets at the end of the two-stage extrusion process.

Extruder devices for the process of the present disclosure are for example extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one corotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Extruder devices may further be equipped with units for pelletizing the melt, such as underwater pelletizers.

In stage (i) component A, i.e. the recycled polyolefin material, can be fed in ground flakes or other free or non-free-flowing form such as, for example, fluff, film rolls, or other low bulk density form via gravimetric dosing. This may ensure an homogenous melt of component A being fed to the second extruder.

The recycled polyolefin material in flakes can be optionally compacted and preheated, preferably in a dedicated compactor with forced feeding, before feeding it to the first extruder.

The recycled polyolefin material is then molten in the first extrusion stage where also the degassing, humidity removal and contaminant removal may optionally be performed by melt filtration equipment.

Several design of melt filtration units can be applied, depending on amount and particle size of the solid impurities.

It is preferred using self-cleaning melt filters that can be operated for several days without manual intervention to replace filtration elements.

One preferred design of melt filter is based on a circular perforated plate as melt filtration element, with holes produced by laser or by machining or by other suitable technology, where solid contaminant are accumulated. Accumulation of impurities may increase differential pressure across the melt filter. In order to perform a continuous cleaning of the filtration element, a rotating scraper removes the accumulated impurities and guides them to a discharge port, that is opened for short time to purge out of the process contaminated material. However, the amount of contaminated material being purged out will be negligible with respect to the content of fraction A in the polymer composition.

This cleaning cycle can be repeated several times (up to operation time of several days) without manual intervention or need to stop production for the time needed to replace the filtration element.

Another option of continuous melt filter is based on the application of continuous filtering metal bands through which polymer flow is passed. Impurities are accumulated on the metal filter generating an increases of pressure. Accordingly the clogged filtering band section is pushed out of the polymer passage area and clean section is then automatically inserted.

Another family of continuous melt filters which is possible to install is the so called Backflush Continuous Screen Changer. As contaminants build up on the screen pack, a pressure set point or a timer initiates the backflush operation in fully automated way, lifting and evacuating the impurities from screen surface before inserting the screen back in service.

Continuous melt filtration is achieved using multiple screen pockets. During backflush or screen change, performed separately on the various pockets, part of the available filter area remains online. Each screen is self-cleaned in sequence as needed according to contamination level and line pressure until the backflush process can no longer effectively remove embedded contaminants requiring then to change the screen pack.

In stage (ii) the recycled molten polyolefin stream is then fed to the second extruder, which is preferably a twin screw extruder.

In a preferred aspect of the present disclosure, the flow rate of the recycled molten polyolefin stream is unmetered.

In a preferred aspect of the present disclosure, the entry point of the recycled molten polyolefin stream in the second extruder stage is located after the feed point, preferably the hopper, for component B.

In stage (iii) component B, which is preferably a virgin polyolefin, can be fed in any form such as flakes, powder or pellets. Preferably it is fed in either powder or pelletized form. most preferably is fed in pelletized form. With the term powder form according to the present disclosure is meant polymer particles having particle size and particle size distribution directly deriving from polymerization process and not yet pelletized.

The polyolefin composition of the present disclosure may also comprise one or more additives and/or reinforcing agents customarily used in the art. Additives and/or reinforcing agents may be fed to the first extruder or the second extruder or both depending on the need. As an example, anticorrosion additives may be added to the first extruder in order to prevent corrosion problems deriving from chemicals released by the recycled polyolefin material. Other additives, such as stabilizers, antioxidants and so on, can for example be fed to the second extruder.

The virgin polymers and optionally additives are preferably subject to melting and mixing in the first section of the second extruder before the entry point of the molten stream from the first extruder.

The two melt streams are homogenized in the second extruder, optionally also adding and incorporating reinforcing agents, and are then formed into pellets with method known in the art as underwater pelletization, water ring pelletization, strand pelletization.

In stage (iv) of the process of the present disclosure the virgin polyolefin and the optionally supplied one or more additives and/or reinforcing agents are supplied to metering device before being transferred, preferably by gravity, to the second extruder device for melting and further mixing.

Preferably, the virgin polyolefin and the optionally supplied one or more additives and/or reinforcing agents are fed by using dedicated continuous metering devices associated to the mixing device, as for example loss in weight feeders or mass flow meters.

According to a preferred embodiment of the present disclosure, it is ensured that the relative ratio between recycled polyolefin, virgin polyolefin, as well as possible additives and/or reinforcing agents, in the final polyolefin composition is kept in accordance with preset formulation composition by adjusting the flow rates of virgin polymer and additives and/or reinforcing agents based on the actually metered amount of pelletized final polyolefin composition. In particular, the computing unit accurately determines the difference between the actually produced and metered amount of final polyolefin composition, and the metered flow of virgin polyolefin and possibly additives and/or reinforcing agents. This difference precisely corresponds to the unmetered flow of recycled polyolefin. Based on this calculated flow of recycled polyolefin, the computing unit, via a proper controller, adjusts the flow of the virgin polyolefin powder feeding device and additives and/or reinforcing agent feeding device so as to meet the set points for virgin polymers and additives and/or reinforcing agent that were predetermined based on the pre-set compositional parameters of the final polyolefin composition.

The accuracy of the metering device is much higher than what can be achieved by using a melt gear pump since it measures the real polymer pellet flow produced, without being affected by pumping efficiency or different melt density.

Moreover, by using the process of the present disclosure a high efficiency is achieved as the recycled material and the virgin polymer material can be subject to a single melting and pelletization stage.

The flow rate of the polyolefin pellets of the final composition is preferably measured on dried polyolefin pellets, i.e. preferably downstream of the usually employed underwater pelletizer and centrifugal drier. In this embodiment, the flow rates of the optionally supplied one or more additives and reinforcing agents are adjusted based on the actual amount of polyolefin pellets produced in the second extruder device, preferably employing different control characteristics and equipment for controlling the flow rates of the optionally supplied additives and reinforcing agents and for controlling the feed of polyolefin powder.

The flow rate of the polyolefin pellets produced in the second extruder device is continuously or discontinuously measured to determine the total production rate. Preferably, the pellet flow is measured by a pellet flow meter. Pellet flow meters can for example use impact plate, measuring chute or Coriolis measuring technologies. Such solids flow meters are commercially available, for example from Schenck Process, Whitewater, WI, USA or Coperion K-Tron, Gelnhausen, Germany.

Alternative devices and methods can be applied as for example weighed movable belts. Example of discontinuous measure of pellet flow is obtained by measuring the weight increase in the pellet collection bin and out of this calculating pellet flow rate.

The pellet flow meter is preferably equipped with a controller. As already disclosed, this controller, operated by the computing unit, allows adjusting the speed of the feeding device, which supplies the virgin polyolefin and the additive and/or reinforcing agent to the extruder, based on information regarding their amount needed to be supplied in view of preset formulation recipe.

The same feeding, metering and controlling system are operated by the same computing unit which can also adjust the feed rate of the peroxide (or equivalent visbreaking agent) to the first extruder if used to modify the recycled polyolefin melt flow rate.

When used, the peroxide feeding device supplies the peroxide preferably to the extruder feed point where the recycled polyolefin is fed.

In this embodiment, a melt flow rate measuring device is optionally associated to the outlet of the first stage extruder. Preferably, this device is able to in-line measuring the melt flow rate and the resulting values constitute an input for the computing unit. Based on the difference between preset and measured melt flow rate value of the recycled polyolefin material the computing unit, via a proper controller, operates the peroxide feeding device by adjusting the feeding rate in order to align the measured melt flow rate value with the preset one.

Alternatively or in addition to adjusting the melt flow rate of component A with peroxide, the melt flow rate of the final pelletized composition may be controlled by adjusting the flow of component B in response to a measurement of the melt flow rate of the final pelletized composition, the molten mixture of component A and component B in the second extruder or of the molten component A before entering the second extruder. Thus, a final pelletized composition having a pre-set melt flow index may be produced. The measurement of the melt flow rate may for example be done via a in-line rheometer.

The computing control unit can be any computing device able to perform the determination of the present disclosure. The computing unit may be a programmable computing controller (PLC) adapted for the control of manufacturing processes, such as assembly lines, machines, robotic devices, or any activity that requires high reliability, ease of programming, and process fault diagnosis.

In a preferred embodiment, the computing unit operates in cooperation with local controllers which send to the computing unit the data received from the metering devices and directly control the feeding devices based on the output received from the computing unit.

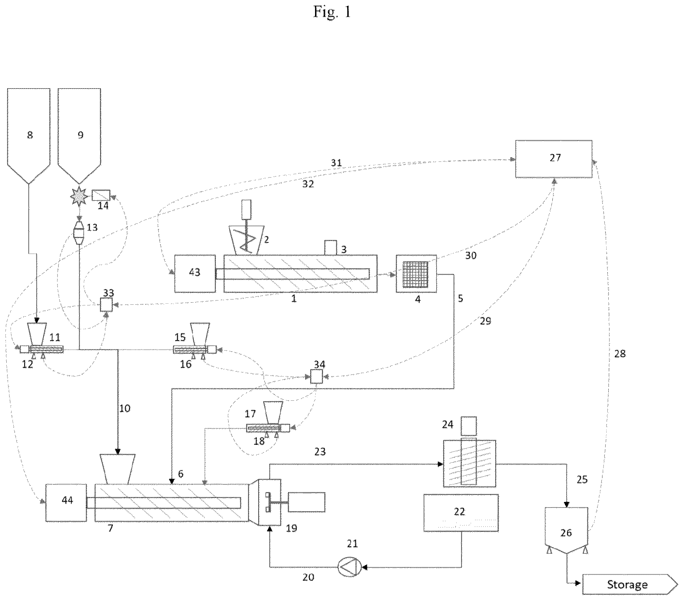

With reference to Fig. 1, component A, which is a recycled polyolefin is supplied to the hopper (2) of the first stage extruder (1) via gravimetric dosing. The first extruder (1) may optionally be provided with vacuum degassing for humidity removal (3) and a melt filter section (4). The molten stream is supplied via line (5) to the entry point (6) of the second extruder (7). Component B, which is preferably a virgin polymer, in silos (8, 9) is fed to the second extruder (7) via line (10), which receives the polymer either by feeding device (11) equipped with loss in weight metering device (12) or by the feeding device (14) equipped with the mass flow meter metering device (13). Additives and reinforcing agents can be supplied via feeding devices (15, 17) provided with metering devices (16, 18). The second stage extruder (7) is associated to a slurry underwater pelletizer (19) which is supplied with water via line (20), water recirculation pump (21) and water tank (22). The pellets exiting the pelletizer are conveyed via line (23) to a spin drier (24). Dry pellets are then fed via line (25) to a pellet metering device (26) and further to a storage vessel (not shown).

The computing unit (27) receives input data (28) from the pellet metering device (26) and, via controllers (33, 34), from the metering devices (12, 14 16, 18) of feeding devices (11, 13, 15 and 17), and sends output data (29, 30, 31, 32), via controllers (33, 34), to the feeding devices (11, 13, 15, 17) , to adjust feeding rate and as well as to first extruder motor (1) and second extruder motor (2) to adjust total flow rate in view of metered total flow rate.

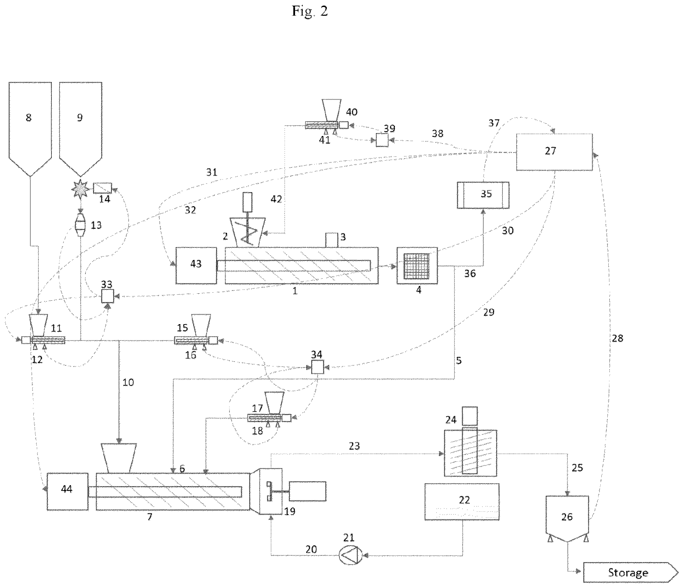

With reference to Fig. 2, the in-line MFR measuring device (35), positioned on line (36), provide an input (37) to the computing unit (27) which sends output (38) to control (39) for adjusting the speed of the feeding device (40) equipped with metering devices 41, supplying, via line 42, peroxide to the hopper (2).

Alternatively, in-line MFR measuring devices (not shown) may be provided for measuring the MFR of the melt in the second extruder after mixing of component A and component B and optionally one or more additives. Based on said measurement and a pre-set target value of the MFR, the flow of component B may be adjusted.

With the process of the present disclosure the capacity of the extruder can be utilized, while polyolefin compositions having a fraction of recycled material with improved properties can be produced in an economical manner. For instance, by adding virgin polyolefins as component B, the density, melt flow rate, tensile strength, young modulus, charpy etc. of the final composition may be adjusted. In addition, odor improvement may be achieved as the fractions of volatile organic compounds, which are believed to contribute to unpleasant odors in recycled plastic resin, may be further reduced by compounding with component B.

## Claims

1. A process for preparing a pelletized polyolefin composition; the process comprises the steps of:
i. providing a continuous stream of component A, component A being washed and sorted recycled polyolefin material;
ii. gravimetrically feeding the recycled polyolefin material to a first extruder and forming a molten recycled polyolefin material stream,
iii. feeding the molten recycled polyolefin material stream coming from the first extruder to a feeding inlet of a second extruder; and
iv. feeding a stream of a component B to the second extruder, component B being a polyolefin material different from component A.

2. The process of claim 1, wherein the stream of polyolefin material different from the recycled polyolefin material is a virgin polyolefin deriving from the polymerization of olefins, such as ethylene, propylene, 1-butene, 1-hexene, and 1-octene and mixtures thereof.

3. The process of claim 1 or 2, wherein the recycled polyolefin material comprises a mixture of polyethylene (PE) and polypropylene (PP) polymers in a weight ratio from 99: 1 to 1:99.

4. The process of any one of claims 1 to 3, wherein the molten recycled polyolefin material stream is fed to the second extruder at a location after the feeding point of component B.

5. The process of claim 4, wherein at the location the molten recycled polyolefin material stream is added to a melt of component B.

6. The process of any one of claims 1 to 5, wherein the process further comprises the steps of:
measuring the flow rate of component B supplied to the second extruder and measuring the flow rate of the pellets of the final polyolefin composition obtained from the second extruder;
wherein a computing unit operation device is provided, the computing unit operation device receiving data on measured flow rate of component B and measured flow rate of pelletized final polymer composition, and adjusting the flow rate of the component B supplied to the second extruder in response to the difference between the measured flow rate of component B and of the measured flow of pelletized final polymer composition in order to produce a final pelletized polyolefin composition having the pre-set relative content of component B and component A.

7. The process of any one of claims 1 to 5, wherein the process further comprises the steps of:
measuring the melt flow rate of molten component A, the mixture of molten component A and molten component B and/or of the pellets of the final polyolefin composition obtained from the second extruder;
wherein a computing unit operation device is provided, the computing unit operation device receiving data on the measured melt flow rate of molten component A, the mixture of molten component A and molten component B and/or the pellets of the final polyolefin composition obtained from the second extruder, and adjusting the flow rate of component B supplied to the second extruder in response to the difference between the measured melt flow rate and a pre-set target melt flow rate of the pelletized final polymer composition.

8. The process according to claim 1 in which the polyolefin composition further comprises additives and, optionally, reinforcing agents.

9. The process according to claim 1 in which the polyolefin composition comprises a polyolefin portion ranging from 80 to 99.98 wt.%, of the total polyolefin composition.

10. The process according to claim 1 in which component A in flakes is compacted and preheated before being fed to the extruder.

11. The process according to claim 6 in which the relative ratio between recycled polyolefin, virgin polyolefin, as well as possible additives and/or reinforcing agents, in the final polyolefin composition is kept in accordance with pre-set formulation composition by adjusting the flow rates of virgin polymer and additives and/or reinforcing agents based on the actually metered amount of pelletized final polyolefin composition.

12. The process according to claim 11 in which the computing unit determines the difference between the actually produced and metered amount of final polyolefin composition, and the metered flow of component A and possibly additives and/or reinforcing agents.

13. The process according to claim 12 in which the computing unit, via a proper controller, adjusts the flow of the component B feeding device and additives and/or reinforcing agent feeding device so as to meet the predetermined set points for component B and additives and/or reinforcing agent.

14. The process according to claim 1 in which the flow rate of the polyolefin pellets of the final composition is measured on dried polyolefin pellets via a pellet flow meter.
